# EUROPÄISCHE PATENTSCHRIFT

(11) **EP 1 920 526 B1**
(45) Veröffentlichungstag und Bekanntmachung des Hinweises auf die Patenterteilung: **17.02.2010**
(21) Anmeldenummer: 06778113.8
(22) Anmeldetag: 02.08.2006
(51) Int. Cl.: H02M 5/45

(54) **STROMRICHTERSCHALTUNG MIT VERTEILTEN ENERGIESPEICHERN**
CONVERTER CIRCUIT COMPRISING DISTRIBUTED ENERGY STORES
MONTAGE CONVERTISSEUR A ACCUMULATEURS D'ENERGIE REPARTIS

(30) Priorität: 30.08.2005 DE 102005041087
(43) Veröffentlichungstag der Anmeldung: 14.05.2008
(73) Patentinhaber: SIEMENS AKTIENGESELLSCHAFT, 80333 München (DE)
(72) Erfinder: HILLER, Marc, 90455 Nürnberg (DE)
(86) Internationale Anmeldenummer: PCT/EP2006/064925
(87) Internationale Veröffentlichungsnummer: WO 2007/025828

(56) Entgegenhaltungen:
- DE-A1- 10 103 031
- DE-A1- 10 217 889
- DE-A1- 10 323 220

## Beschreibung

Die Erfindung bezieht sich auf eine Stromrichterschaltung gemäß Oberbegriff des Anspruchs 1.

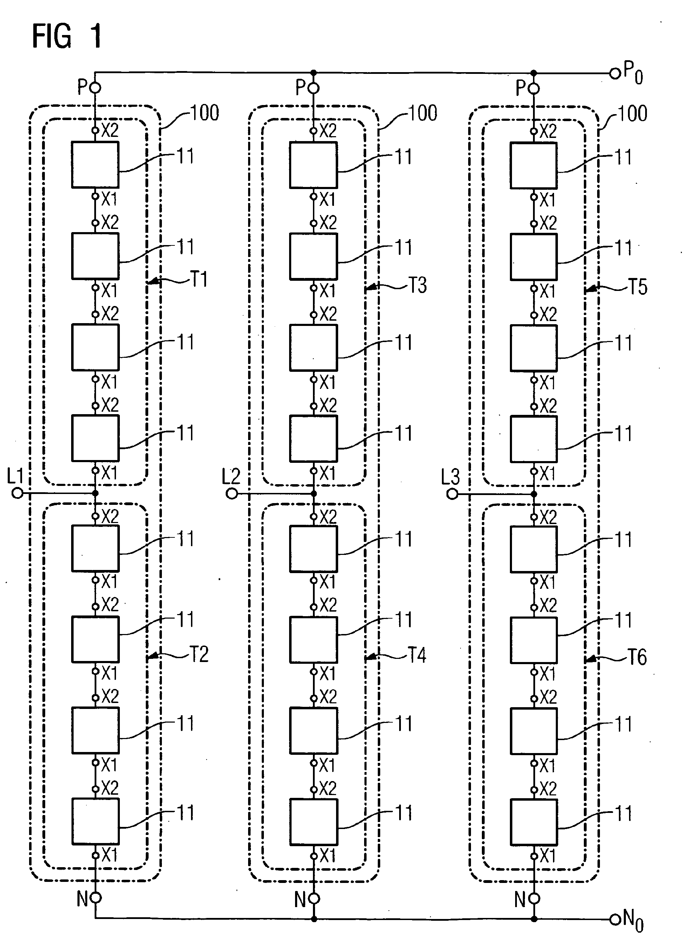

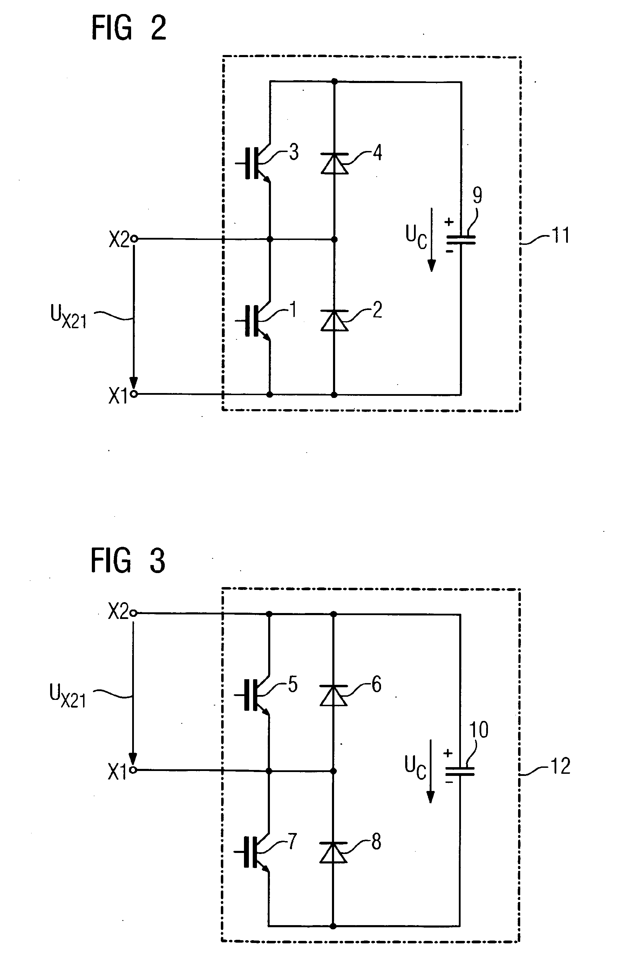

Eine derartige gattungsgemäße Stromrichterschaltung ist aus der DE 101 03 031 A1 bekannt und ein Ersatzschaltbild einer derartigen Stromrichterschaltung ist in der Figur 1 näher dargestellt. Gemäß diesem Ersatzschaltbild weist diese bekannte Stromrichterschaltung drei Phasenmodule auf, die jeweils mit 100 bezeichnet sind. Diese Phasenmodule 100 sind gleichspannungsseitig jeweils mit einer positiven und einer negativen Gleichspannungs-Sammelschiene P₀ und N₀ elektrisch leitend verbunden. Zwischen diesen beiden Gleichspannungs-Sammelschienen P₀ und N₀ steht eine nicht näher bezeichnete Gleichspannung an. Jedes Phasenmodul 100 weist ein oberes und ein unteres Stromrichterventil T1 bzw. T3 bzw. T5 und T2 bzw. T4 bzw. T6 auf. Jedes dieser Stromrichterventile T1 bis T6 weist eine Anzahl von elektrisch in Reihe geschalteten zweipoligen Subsystemen 11 auf. In diesem Ersatzschaltbild sind vier dieser Subsysteme 11 dargestellt. An Stelle der zweipoligen Subsysteme 11 (Fig. 2) können auch zweipolige Subsysteme 12 (Fig. 3) elektrisch in Reihe geschaltet werden. Jeder Verknüpfungspunkt zweier Stromrichterventile T1 und T2 bzw. T3 und T4 bzw. T5 und T6 eines Phasenmoduls 100 bildet einen wechselspannungsseitigen Anschluss L1 bzw. L2 bzw. L3 dieses Phasenmoduls 100. Da in dieser Darstellung die Stromrichterschaltung drei Phasenmodule 100 aufweist, kann an deren wechselspannungsseitigen Anschlüssen L1, L2 und L3, auch als Lastanschlüsse bezeichnet, eine dreiphasige Last, beispielsweise ein Drehstrommotor, angeschlossen werden.

In der Figur 2 ist ein Ersatzschaltbild einer bekannten Ausführungsform eines zweipoligen Subsystems 11 näher dargestellt. Die Schaltungsanordnung nach Figur 3 stellt eine funktional völlig gleichwertige Variante dar, die ebenfalls aus der DE 101 03 031 A1 bekannt ist. Diese bekannten zweipoligen Subsysteme 11 und 12 weisen jeweils zwei abschaltbare Halbleiterschalter 1, 3, und 5, 7 zwei Dioden 2, 4 und 6, 8 und einen unipolaren Speicherkondensator 9 und 10 auf. Die beiden abschaltbaren Halbleiterschalter 1 und 3 bzw. 5 und 7 sind elektrisch in Reihe geschaltet, wobei diese Reihenschaltungen elektrisch parallel zu einem Speicherkondensator 9 bzw. 10 geschaltet sind. Jedem abschaltbaren Halbleiterschalter 1 und 3 bzw. 5 und 7 ist eine der beiden Dioden 2, 4 und 6, 8 derart elektrisch parallel geschaltet, dass diese zum korrespondierenden abschaltbaren Halbleiterschalter 1, 3, 5, oder 7 antiparallel geschaltet ist. Der unipolare Speicherkondensator 9 des Subsystems 11 bzw. 12 besteht entweder aus einem Kondensator oder einer Kondensatorbatterie aus mehreren solchen Kondensatoren mit einer resultierenden Kapazität C₀. Der Verbindungspunkt von Emitter des abschaltbaren Halbleiterschalters 1 bzw. 5 und Anode der Diode 2 bzw. 6 bildet eine Anschlussklemme X1 des Subsystems 11 bzw. 12. Der Verbindungspunkt der beiden abschaltbaren Halbleiterschalter 1 und 3 und der beiden Dioden 2 und 4 bilden eine zweite Anschlussklemme X2 des Subsystems 11. Der Verbindungspunkt von Kollektor-Anschluss des abschaltbaren Halbleierschalters 5 und Kathode der Diode 6 bildet eine zweite Anschlussklemme X2 des Subsystems 12.

In beiden Darstellungen der Ausführungsformen der beiden Subsysteme 11 und 12 werden als abschaltbare Halbleiterschalter 1 und 3 wie in den Figuren 2 und 3 dargestellt Insulated-Gate-Bipolar-Transistoren (IGBT) verwendet. Außerdem können MOS-Feldeffekttransistoren, auch als MOS-FET bezeichnet, verwendet werden. Ebenfalls können als abschaltbare Halbleiterschalter 1 und 3 Gate-Turn-Off-Thyristoren, auch als GTO-Thyristoren bezeichnet, oder Integrated-Gate-Commutated Thyristoren (IGCT) verwendet werden.

Gemäß der DE 101 03 031 A1 können die Subsysteme 11 bzw. 12 eines jeden Phasenmoduls 100 der Stromrichterschaltung nach Figur 1 in einem Schaltzustand I und II gesteuert werden. Im Schaltzustand I ist der abschaltbare Halbleiterschalter 1 bzw. 5 eingeschaltet und der abschaltbare Halbleiterschalter 3 bzw. 7 des Subsystems 11 bzw. 12 ausgeschaltet. Dadurch ist eine an den Anschlussklemmen X1 und X2 anstehende Klemmenspannung U_{X21} des Subsystems 11 bzw. 12 gleich Null. Im Schaltzustand II sind der abschaltbare Halbleiterschalter 1 bzw. 5 ausgeschaltet und der abschaltbare Halbleiterschalter 3 bzw. 7 des Subsystems 11 bzw. 12 eingeschaltet. In diesem Schaltzustand II ist die anstehende Klemmenspannung U_{X21} gleich der am Speicherkondensator 9 bzw. 10 anstehenden Kondensatorspannung U_{C}.

Gemäß dem Ersatzschaltbild der Stromrichterschaltung nach Figur 1 weist diese pro Phasenmodul 100 acht zweipolige Subsysteme 11 bzw. 12, jeweils vier pro Stromrichterventile T1, T2 bzw. T3, T4 bzw. T5, T6 auf, die mittels ihrer Anschlussklemmen X1 und X2 elektrisch in Reihe geschaltet sind. Die Anzahl der elektrisch in Reihe geschalteten zweipoligen Subsysteme 11 bzw. 12 hängt einerseits von einer zwischen den beiden Gleichspannungs-Sammelschienen P₀ und N₀ anstehenden Gleichspannung und andererseits von den verwendeten abschaltbaren Halbleiterschaltern 1, 3, 5 und 7 ab. Außerdem spielt es eine Rolle, wie genau eine am wechselspannungseitigen Anschluss L1, L2 bzw. L3 anstehende sinusförmige Wechselspannung einem Sinusverlauf folgen soll.

Für den Aufbau und Betrieb einer gemäß Figur 1 ausgebildeten Stromrichterschaltung ist es erforderlich, die abschaltbaren Halbleiterschalter 1, 3 bzw. 5, 7 eines jeden zweipoligen Systems 11 bzw. 12 mit einer geeigneten Schaltung anzusteuern, sowie verschiedene Messwerte des zweipoligen Subsystems 11 bzw. 12, beispielsweise die am Speicherkondensator 9 bzw. 10 anstehende Kondensatorspannung U_{C}, zu erfassen und an eine übergeordnete Stromrichterregelung weiterzuleiten. Deshalb weist jedes zweipolige Subsystem 11 bzw. 12 eine Elektronik auf, die in den Darstellungen der Subsysteme 11 und 12 gemäß den Figuren 2 und 3 aus Übersichtlichkeitsgründen nicht explizit dargestellt sind. Diese Elektronik, im Folgenden auch Elektronikbaugruppe genannt, übernimmt folgende Aufgaben:
- bidirektionale Kommunikation mit der übergeordneten Stromrichterregelung
- Erfassung verschiedener Messwerte und Status- bzw. Fehlersignale
- Ansteuerung der abschaltbaren Halbleiterschalter 1, 3 bzw. 5, 7
- Verarbeitung aller ankommenden und abgehenden Signale.

Außerdem ist es vorteilhaft, aber nicht zwingend notwendig, die Energie für den Betrieb der Elektronikbaugruppe eines zweipoligen Subsystems 11 bzw. 12 direkt aus seinem Speicherkondensator 9 bzw. 10 auszukoppeln. Werden zwischen der E-lektronikbaugruppe eines jeden zweipoligen Subsystems 11 bzw. 12 und der übergeordneten Stromrichterregelung für die Datenübertragung zwei Lichtwellenleiter verwendet, so ist dieser Betrieb potentialfrei. Das Bezugspotential der Elektronikbaugruppe eines jeden zweipoligen Subsystems 11 bzw. 12 ist im Allgemeinen mit einem negativen Pol seines unipolaren Speicherkondensators 9 bzw. 10 verbunden.

Bei der Reihenschaltung mehrerer zweipoliger Subsysteme 11 bzw. 12 für ein Phasenmodul einer Stromrichterschaltung werden im Allgemeinen Subsysteme 11 bzw. 12 einer Ausführungsform verwendet. Das heißt, die Phasenmodule 100 der Stromrichterschaltung gemäß Figur 1 weisen entweder Subsysteme in der Ausführungsform gemäß Figur 2 oder Subsysteme in der Ausführungsform gemäß Figur 3 auf. Bei einer dreiphasigen Stromrichterschaltung gemäß Figur 1 müssen achtundvierzig Lichtwellenleiter zwischen einer übergeordneten Stromrichterregelung und den vierundzwanzig zweipoligen Subsystemen 11 bzw. 12 verlegt werden. Bei der Erhöhung der Anzahl der verwendeten zweipoligen Subsysteme 11 bzw. 12 um ein Subsystem pro Stromrichtersystem T1,...T6, erhöht sich die Anzahl der Lichtwellenleiter um zwölf.

Um diesen Aufwand zu reduzieren, muss die Anzahl der Elektronikbaugruppen pro Stromrichterventil T1,...T6 reduziert werden. Diese Reduktion kann erreicht werden, wenn beispielsweise zwei zweipolige Subsysteme 11 bzw. 12 in ein Subsystem-Modul zusammengefasst werden, wobei dann zwei Elektronikbaugruppen zu einer zusammengefasst werden können. Bei der Verwendung einer Elektronikbaugruppe für wenigstens zwei in einem Subsystem-Modul zusammengefassten zweipoligen Subsystemen 11 bzw. 12 stellt sich die Frage nach der Energieversorgung dieser Elektronikbaugruppe. Wird die benötigte Energie nur aus einem unipolaren Speicherkondensator wenigstens zweier in einem Subsystem-Modul zusammengefassten zweipoligen Subsystemen 11 bzw. 12 ausgekoppelt, so erfolgt die Energieversorgung unsymmetrisch. Daraus resultiert ebenfalls ein höherer Aufwand zur Potentialtrennung bei der Ansteuerung der abschaltbaren Halbleiterschalter 1, 3 bzw. 5, 7 der zusammengefassten Subsysteme 11 bzw. 12 und der Erfassung der Kondensatorspannungen U_{C}, sowie eine nachteilige, unsymmetrische Spannungsaufteilung.

Durch eine derartige Zusammenfassung wenigstens zweier zweipoliger Subsysteme 11 bzw. 12 zu einem Subsystem-Modul halbiert sich die Anzahl der verwendeten Lichtwellenleiter, erkauft sich jedoch einen höheren Aufwand bei der Potentialtrennung und nimmt eine unsymmetrische Energieversorgung in Kauf. Dadurch werden jeweils zwei einfach aufgebaute Subsysteme durch ein komplexeres Subsystem-Modul ersetzt.

Der Erfindung liegt nun die Aufgabe zugrunde, ein zweipoliges Subsystem für eine Stromrichterschaltung anzugeben, mit dem die genannten Nachteile vermieden werden und der Aufwand sich für eine derartige Stromrichterschaltung reduziert.

Diese Aufgabe wird erfindungsgemäß jeweils mit den kennzeichnenden Merkmalen der Ansprüche 1 bis 4 gelöst.

Dadurch, dass vier abschaltbare Halbleiterschalter mit zugehörigen antiparallel geschalteten Dioden und zwei unipolare Kondensatoren erfindungsgemäß verschaltet werden, kann eine gemeinsame Elektronikbaugruppe zum Ansteuern dieser abschaltbaren Halbleiterschalter und zum Erfassen der Kondensatorspannungen verwendet werden, ohne dass ein erhöhter Aufwand für die Potentialtrennung in Kauf genommen werden muss. Auch die Energieauskopplung kann weiterhin symmetrisch erfolgen. Nach außen weist ein derartiges erfindungsgemäßes Subsystem zwei Anschlussklemmen und zwei Anschlüsse für zwei Lichtwellenleiter auf. Damit entspricht dieses erfindungsgemäße Subsystem anschlusstechnisch einem bekannten System. An den beiden Anschlussklemmen kann durch Steuerung dieses Subsystems eine Klemmenspannung generiert werden, die an Stelle von nur zwei Potentialstufen nun vier Potentialstufen aufweist. Somit benötigt man für eine Stromrichterschaltung für eine vorbestimmte hohe Spannung gegenüber einer bekannten Ausführungsform nur noch halb so viele Subsysteme, wobei ebenfalls sich die Anzahl der benötigten Lichtwellenleiter halbiert.

Zur weiteren Erläuterung der Erfindung wird auf die Zeichnung Bezug genommen, in der mehrere Ausführungsformen eines erfindungsgemäßen zweipoligen Systems schematisch veranschaulicht sind.
- Fig. 1: zeigt ein Ersatzschaltbild einer bekannten Stromrichterschaltung mit verteilten Energie- speichern, in den
- Fig. 2 und 3: sind jeweils ein Ersatzschaltbild einer ers- ten und zweiten Ausführungsform eines bekann- ten zweipoligen Subsystems näher dargestellt, die

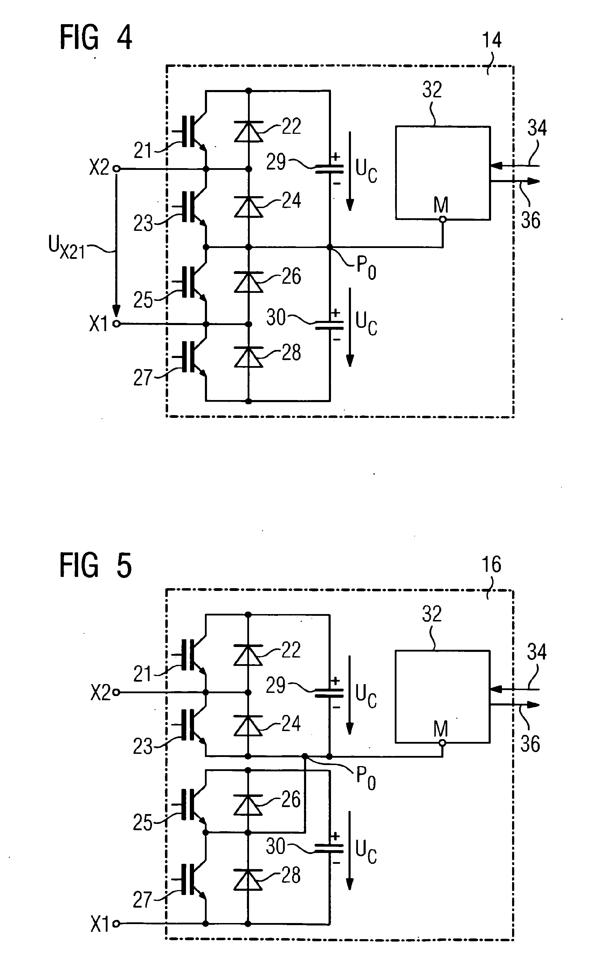

- Fig. 4: zeigt ein Ersatzschaltbild einer ersten Aus- führungsform eines zweipoligen Subsystems nach der Erfindung, in der
- Fig. 5: ist ein Ersatzschaltbild einer zweiten Aus- führungsform eines erfindungsgemäßen zweipo- ligen Subsystems dargestellt und die

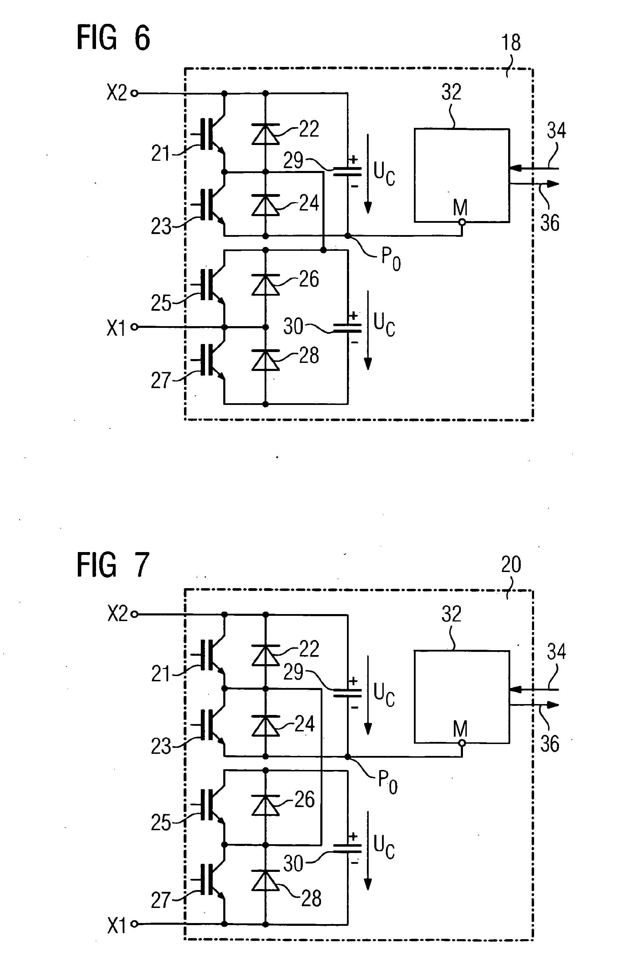

- Fig. 6: zeigt ein Ersatzschaltbild einer dritten Aus- führungsform eines erfindungsgemäßen zweipo- ligen Subsystems, wobei in der
- Fig. 7: ein Ersatzschaltbild einer vierten Ausfüh- rungsform eines zweipoligen Subsystems nach der Erfindung veranschaulicht ist.

In der Figur 4 ist das Ersatzschaltbild einer ersten Ausführungsform eines Subsystems 14 nach der Erfindung näher dargestellt. Dieses erfindungsgemäße zweipolige Subsystem 14 weist vier abschaltbare Halbleiterschalter 21, 23, 25 und 27, vier Dioden 22, 24, 26 und 28, zwei unipolare Kondensatoren 29 und 30 und eine Elektronik 32, nachfolgend auch Elektronikbaugruppe 32 genannt, auf. Die vier abschaltbaren Halbleiterschalter 21, 23, 25 und 27 sind elektrisch in Reihe geschaltet. Jedem dieser Halbleiterschalter 21, 23, 25 und 27 ist eine Diode 22, 24, 26 und 28 elektrisch antiparallel geschaltet. Jeweils ein unipolarer Kondensator 29 bzw. 30 ist elektrisch parallel zu jeweils zwei abschaltbaren Halbleiterschaltern 21, 23 bzw. 25, 27 geschaltet. Der unipolare Kondensator 29 bzw. 30 dieses Subsystems 14 besteht entweder aus einem Kondensator oder einer Kondensatorbatterie aus mehreren solchen Kondensatoren mit einer resultierenden Kapazität C₀. Der Verbindungspunkt der beiden abschaltbaren Halbleiterschalter 21 und 23 und der beiden Dioden 22 und 24 bildet eine zweite Anschlussklemme X2 des Subsystems 14. Der Verbindungspunkt der beiden abschaltbaren Halbleiterschalter 25 und 27 und der beiden Dioden 26 und 28 bildet eine erste Anschlussklemme X1 dieses Subsystems 14. Der Verbindungspunkt des Emitters des abschaltbaren Halbleiterschalters 23, des Kollektors des abschaltbaren Halbleiterschalters 25, der Anode der Diode 24, der Kathode der Diode 26, des negativen Anschlusses des unipolaren Kondensators 29 und des positiven Anschlusses des unipolaren Kondensators 30 bildet ein gemeinsames Potential P₀, das mit einem Bezugspotential-Anschluss M der Elektronikbaugruppe 32 elektrisch leitend verbunden ist. Diese Elektronikbaugruppe 32 ist mittels zweier Lichtwellenleiter 34 und 36 signaltechnisch mit einer nicht näher dargestellten, übergeordneten Stromrichterregelung verknüpft. Das gemeinsame Potential P₀ dient als Bezugspotential für die Elektronikbaugruppe 32. Grundsätzlich sind solche Potentiale als Bezugspotentiale zu wählen, die keine unnötig hohen Spannungsbeanspruchungen für Treiberbausteine der abschaltbaren Halbleiterschalter 21, 23, 25 und 27 bzw. der Modulgehäuse dieser abschaltbaren Halbleiterschalter 21, 23, 25 und 27 erzeugen.

Dieses erfindungsgemäße Subsystem 14 kann in vier Schaltzustände I, II, III und IV gesteuert werden. Im Schaltzustand I sind die abschaltbaren Halbleiterschalter 21 und 25 eingeschaltet und die abschaltbaren Halbleiterschalter 23 und 27 ausgeschaltet. Dadurch ist eine an den Anschlussklemmen X2 und X1 anstehende Klemmenspannung U_{X21} des Subsystems 14 gleich der am Kondensator 29 anstehenden Kondensatorspannung U_{C}. Im Schaltzustand II sind die abschaltbaren Halbleiterschalter 21 und 27 eingeschaltet, wogegen die abschaltbaren Halbleiterschalter 23 und 25 ausgeschaltet sind. Die Klemmenspannung U_{X21} des Subsystems 14 entspricht nun der Summe der Kondensatorspannungen U_{C} an den unipolaren Kondensatoren 29 und 30. Im Schaltzustand III sind die abschaltbaren Halbleiterschalter 23 und 25 eingeschaltet und die abschaltbaren Halbleiterschalter 21 und 27 ausgeschaltet. In diesem Schaltzustand ist die Klemmenspannung U_{X21} des Subsystems 14 gleich Null. Im Schaltzustand IV sind die abschaltbaren Halbleiterschalter 23 und 27 eingeschaltet, wogegen die abschaltbaren Halbleiterschalter 21 und 25 ausgeschaltet. Dadurch wechselt die Klemmenspannung U_{X21} des Subsystems 14 von der Potentialstufe "Null" zur Potentialstufe "Kondensatorspannung U_{C}", die am unipolaren Kondensator 30 ansteht. Im Schaltzustand I bzw. IV nimmt bzw. gibt der Energiespeicher 29 bzw. 30 von einer Klemmstromrichtung abhängig Energie auf oder ab. Im Schaltzustand II nehmen bzw. geben die Kondensatoren 29 und 30 in Abhängigkeit einer Klemmstromrichtung Energie auf oder ab. In einem Schaltzustand III ("Null") bleibt die Energie in den Kondensatoren 29 und 30 konstant. Somit entspricht dieses erfindungsgemäße Subsystem 14 von der Funktionalität her der Reihenschaltung des bekannten Subsystems 11 mit dem bekannten Subsystem 12. Demgegenüber weist dieses erfindungsgemäße Subsystem 14 jedoch nicht die Nachteile einer solchen Reihenschaltung auf.

Bei der Reihenschaltung der beiden bekannten Subsysteme 11 und 12 weist jedes Subsystem 11 und 12 weiterhin ein eigenes Bezugspotential und eine eigene Elektronikbaugruppe auf. Wenn von diesen beiden Elektronikbaugruppen nur eine verwendet werden soll und die Energie für diese Elektronikbaugruppe nur aus einem korrespondierenden Kondensator ausgekoppelt werden soll, erfolgt die Energieauskopplung unsymmetrisch und erzeugt Unsymmetrien in der Spannungsaufteilung. Außerdem muss dann bei der Ansteuerung der abschaltbaren Halbleiterschalter und der Erfassung der Kondensatorspannungen ein höherer Aufwand zur Potentialtrennung betrieben werden. Diese Nachteile treten bei dem erfindungsgemäß ausgestalteten zweipoligen Subsystem 14 nicht mehr auf.

Die Figur 5 zeigt ein Ersatzschaltbild einer zweiten Ausführungsform eines zweipoligen Subsystems 16 nach der Erfindung. Dieses Subsystem 16 unterscheidet sich von dem Subsystem 14 gemäß Figur 4 dadurch, dass jeweils nur zwei abschaltbare Halbleiterschalter 21, 23 und 25, 27 elektrisch in Reihe geschaltet sind. Jedem abschaltbaren Halbleiterschalter 21, 23, 25 und 27 ist wie bei dem Subsystem 14 eine Diode 22, 24, 26 und 28 elektrisch antiparallel geschaltet. Elektrisch parallel zu jeder Reihenschaltung ist ein unipolarer Kondensator 29 bzw. 30 elektrisch parallel geschaltet. Der Verbindungspunkt des Emitters des abschaltbaren Halbleiterschalters 23, der Anode der Diode 24 und des negativen Anschlusses des unipolaren Kondensators 29 ist mit einem Verbindungspunkt der beiden elektrisch in Reihe geschalteten abschaltbaren Halbleiterschalter 25, 27 elektrisch leitend verbunden. Dieser Verbindungspunkt bildet ein gemeinsames Potential P₀, mit dem der Bezugspotential-Anschluss M der Elektronikbaugruppe 32 elektrisch leitend verbunden ist. Außerdem bildet der Verbindungspunkt des Emitters des abschaltbaren Halbleiterschalters 27, die Anode der Diode 28 und der negative Anschluss des unipolaren Kondensators 30 die Anschlussklemme X1 des Subsystems 16. Somit entspricht diese Ausführungsform des zweipoligen Subsystems 16 von der Funktionalität her der Reihenschaltung zweier bekannter Subsysteme 11. Gegenüber der Verwendung des negativen Anschlusses des Kondensators 29 als Bezugspotential für die Elektronikbaugruppe 32 können auch andere Anschlüsse als Bezugspotential verwendet werden. Grundsätzlich sind auch hier wieder solche Potentiale als Bezugspotential zu wählen, die keine unnötig hohen Spannungsbeanspruchung für die Treiberbausteine der abschaltbaren Halbleiterschalter 21, 23, 25 und 27 bzw. deren Modu ehäuse erzeugen.

Bei einer durch Figur 6 dargestellten dritten Ausführungsform des zweipoligen Subsystems 18 nach der Erfindung sind wie bei dem Subsystem 16 gemäß Figur 5 jeweils zwei abschaltbare Halbleiterschalter 21, 23 und 25, 27 elektrisch in Reihe geschaltet. Gegenüber dem Subsystem 16 ist nun der Verbindungspunkt der beiden elektrisch in Reihe geschalteten abschaltbaren Halbleiterschalter 21 und 23 mit einem Verbindungspunkt des Kollektors des abschaltbaren Halbleiterschalters 25, der Kathode der Diode 26 und des positiven Anschlusses des Kondensators 30 elektrisch leitend verbunden. Der Verbindungspunkt der beiden elektrisch in Reihe geschalteten abschaltbaren Halbleiterschalter 25 und 27 bildet nun eine erste Anschlussklemme X1, wogegen der Verbindungspunkt des Kollektors des abschaltbaren Halbleiterschalters 21, der Kathode der Diode 22 und des positiven Anschlusses des Kondensators 29 eine zweite Anschlussklemme X2 dieses Subsystems 18 bildet. Als Bezugspotential für die Elektronikbaugruppe 32 dieses Subsystems 18 ist ebenfalls der negative Anschluss des unipolaren Kondensators 29 wie beim Subsystem 16 vorgesehen. Dieses Subsystem 18 entspricht von der Funktionalität her der Reihenschaltung zweier bekannter Subsysteme 12.

Beim zweipoligen Subsystem 20 entsprechend dem Ersatzschaltbild gemäß Figur 7 sind ebenfalls jeweils zwei von vier abschaltbaren Halbleiterschaltern 21, 23 und 25, 27 elektrisch in Reihe geschaltet, wobei jedem abschaltbaren Halbleiterschalter 21,..., 27 eine Diode 22, 24, 26 und 28 elektrisch antiparallel geschaltet sind. Jeweils ein Kondensator 29 bzw. 30 ist elektrisch parallel zu einer Reihenschaltung der abschaltbaren Halbleiterschalter 21, 23 bzw. 25, 27 geschaltet. Der Verbindungspunkt der beiden elektrisch in Reihe geschalteten abschaltbaren Halbleiterschalter 21 und 23 ist elektrisch leitend mit dem Verbindungspunkt der beiden elektrisch in Reihe geschalteten abschaltbaren Halbleiterschalter 25 und 27 verbunden. Der Verbindungspunkt des Kollektors des abschaltbaren Halbleiterschalters 21, der Kathode der Diode 22 und des positiven Anschlusses des Kondensators 29 bildet bei diesem Subsystem 20 eine zweite Anschlussklemme X2. Der Verbindungspunkt des Emitters des abschaltbaren Halbleiterschalters 27, der Anode der Diode 28 und des negativen Anschlusses des Kondensators 30 bildet eine erste Anschlussklemme X1 des Subsystems 20. Dieses Subsystem 20 entspricht von der Funktionalität her der Reihenschaltung eines bekannten Subsystems 12 mit einem bekannten Subsystem 11.

Durch diese erfindungsgemäße Ausgestaltung der Subsysteme 14, 16, 28 und 20 für eine Stromrichterschaltung für hohe Spannungen, insbesondere auf dem Gebiet der Antriebs- und Energietechnik, wird die Anzahl von Lichtwellenleitern zwischen einer Stromrichterschaltung, bestehend aus einer Vielzahl von in Reihe geschalteten Subsystemen und einer übergeordneten Stromrichterregelung, gegenüber einer bekannten Stromrichterschaltung für hohe Spannungen halbiert. Jedes Subsystem kann derart angesteuert werden, dass an seinen Anschlussklemmen X2, X1 eine Klemmenspannung U_{X21} ansteht, die vier verschiedene Potentialstufen annehmen kann. Eine derartige Klemmenspannung U_{X21} kann man mit herkömmlichen Subsystemen 11 und 12 nur dann erreichen, wenn zwei in Reihe geschaltete Subsysteme 11, 12 bzw. 12, 12, bzw. 11, 11 bzw. 12, 11 verwendet werden. Gegenüber einer bloßen Reihenschaltung zweier bekannter Subsysteme 11 und 12, wobei diese in einem Modul untergebracht sind, benötigt das erfindungsgemäße Subsystem 14 bzw. 16 bzw. 18 bzw. 20 nur eine Elektronikbaugruppe 32 und seine Energieversorgung aus den Kondensatoren 29 und 30 kann weiterhin symmetrisch erfolgen. Dadurch wird bei der Ansteuerung und bei der Erfassung einer Kondensatorspannung U_{C} kein höherer Aufwand zur Potentialtrennung benötigt.

## Patentansprüche

1. Stromrichterschaltung mit wenigstens einem ein oberes und ein unteres Stromrichterventil (T1,..., T6) aufweisenden Phasenmodul (100), wobei jedes Stromrichterventil (T1,..., T6) wenigstens ein zweipoliges Subsystem aufweist, **dadurch gekennzeichnet, dass** jedes zweipolige Subsystem (14) vier abschaltbare Halbleiterschalter (21, 23, 25, 27), vier Dioden (22, 24, 26, 28), zwei unipolare Speicherkondensatoren (29, 30) und eine Elektronik (32) aufweist, dass jedem abschaltbaren Halbleiterschalter (21, 23, 25, 27) eine Diode (22, 24, 26, 28) elektrisch antiparallel geschaltet sind, dass diese vier abschaltbaren Halbleiterschalter (21, 23, 25, 27) elektrisch in Reihe geschaltet sind, dass die beiden unipolaren Speicherkondensatoren (29, 30) elektrisch in Reihe geschaltet sind, wobei diese Reihenschaltung elektrisch parallel zur Reihenschaltung der abschaltbaren Halbleiterschalter (21, 23, 25, 27) geschaltet ist, dass jeweils ein Verbindungspunkt zweier abschaltbarer Halbleiterschalter (21, 23, 25, 27) jeweils eine Anschlussklemme (X2 bzw. X1) des zweipoligen Subsystems (14) bilden, und dass ein Verbindungspunkt der beiden elektrisch in Reihe geschalteten Speicherkondensatoren (29, 30) mit einem Bezugspotential-Anschluss (M) der Elektronik (32) elektrisch leitend verbunden ist.

2. Stromrichterschaltung mit wenigstens einem ein oberes und ein unteres Stromrichterventil (T1,..., T6) aufweisenden Phasenmodul (100) wobei jedes Stromrichterventil (T1,..., T6) wenigstens ein zweipoliges Subsystem aufweist, **dadurch gekennzeichnet, dass** jedes zweipolige Subsystem (16) vier abschaltbare Halbleiterschalter (21, 23, 25, 27), vier Dioden (22, 24, 26, 28), zwei unipolare Speicherkondensatoren (29, 30) und eine Elektronik (32) aufweist, dass jedem abschaltbaren Halbleiterschalter (21, 23, 25, 27) eine Diode (22, 24, 26, 28) elektrisch antiparallel geschaltet sind, dass jeweils zwei abschaltbare Halbleiterschalter (21, 23, 25, 27) elektrisch in Reihe geschaltet sind, dass jede Reihenschaltung elektrisch parallel zu einem unipolaren Speicherkondensator (29 bzw. 30) geschaltet ist, dass ein Verbindungspunkt zweier abschaltbarer Halbleiterschalter (21, 23) einer ersten Reihenschaltung eine Anschlussklemme (X2) des zweipoligen Subsystems (16) bildet, wobei ein Emitter eines zweiten abschaltbaren Halbleiterschalters (27) der beiden abschaltbaren Halbleiterschalter (25, 27) einer zweiten Reihenschaltung eine zweite Anschlussklemme (X1) des zweipoligen Subsystems (16) bildet, dass ein Verbindungspunkt zweier abschaltbarer Halbleiterschalter (25, 27) der zweiten Reihenschaltung mit einem Emitter eines zweiten abschaltbaren Halbleiterschalters (23) der beiden abschaltbaren Halbleiterschalter (21, 23) der ersten Reihenschaltung elektrisch leitend verbunden ist und dass dieser Verbindungspunkt mit einem Bezugspotential-Anschluss (M) der Elektronik (32) elektrisch leitend verbunden ist.

3. Stromrichterschalter mit wenigstens einem ein oberes und ein unteres Stromrichterventil (T1,..., T6) aufweisenden Phasenmodul (100), wobei jedes Stromrichterventil (T1,..., T6) wenigstens ein zweipoliges Subsystem aufweist, **dadurch gekennzeichnet, dass** jedes zweipolige Subsystem (18) vier abschaltbare Halbleiterschalter (21, 23, 25, 27), vier Dioden (22, 24, 26, 28), zwei unipolare Speicherkondensatoren (29, 30) und eine Elektronik (32) aufweist, dass jedem abschaltbaren Halbleiterschalter (21, 23, 25, 27) eine Diode (22, 24, 26, 28) elektrisch parallel geschaltet sind, dass jeweils zwei abschaltbare Halbleiterschalter (21, 23 bzw. 25, 27) elektrisch in Reihe geschaltet sind, dass jede Reihenschaltung elektrisch parallel zu einem unipolaren Speicherkondensator (29 bzw. 30) geschaltet ist, dass ein Verbindungspunkt zweier abschaltbarer Halbleiterschalter (25, 27) einer zweiten Reihenschaltung eine Anschlussklemme (X1) des zweipoligen Subsystems (18) bildet, wobei ein Kollektor eines ersten abschaltbaren Halbleiterschalters (21) der beiden abschaltbaren Halbleiterschalter (21, 23) einer ersten Reihenschaltung eine zweite Anschlussklemme (X2) des Subsystems (18) bildet, und dass ein Verbindungspunkt zweier abschaltbarer Halbleiterschalter (21, 23) der ersten Reihenschaltung mit einem Kollektor eines ersten abschaltbaren Halbleiterschalters (25) der beiden abschaltbaren Halbleiterschalter (25, 27) der zweiten Reihenschaltung elektrisch leitend verbunden ist, und dass dieser Verbindungspunkt mit dem positiven Anschluss des unipolaren Speicherkondensator (29) elektrisch leitend verbunden ist.

4. Stromrichterschaltung mit wenigstens einem ein oberes und ein unteres Stromrichterventil (T1,..., T6) aufweisenden Phasenmodul (100), wobei jedes Stromrichterventil (T1,..., T6) wenigstens ein zweipoliges Subsystem aufweist, **dadurch gekennzeichnet, dass** jedes zweipolige Subsystem (20) vier abschaltbare Halbleiterschalter (21, 23, 25, 27), vier Dioden (22, 24, 26, 28), zwei unipolare Kondensatoren (29, 30) und eine Elektronik (32) aufweist, dass jedem abschaltbaren Halbleiterschalter (21, 23, 25, 27) eine Diode (22, 24, 26, 28) elektrisch antiparallel geschaltet sind, dass jeweils zwei abschaltbare Halbleiterschalter (21, 23 bzw. 25, 27) elektrisch in Reihe geschaltet sind, dass jede Reihenschaltung elektrisch parallel zu einem unipolaren Speicherkondensator (29 bzw. 30) geschaltet ist, dass die Verbindungspunkte jeweils zweier abschaltbarer Halbleiterschalter (21, 23 bzw. 25, 27) miteinander verbunden sind, dass ein Kollektor eines ersten abschaltbaren Halbleiterschalters (21) einer ersten Reihenschaltung und ein Emitter eines zweiten abschaltbaren Halbleiterschalters (27) einer zweiten Reihenschaltung jeweils eine Anschlussklemme (X2, X1) des zweipoligen Subsystems (20) bilden, und dass ein Bezugspotential-Anschluss (M) der Elektronik (32) mit einem Emitter eines zweiten abschaltbaren Halbleiterschalters (23) der ersten Reihenschaltung elektrisch leitend verbunden sind.

5. Stromrichterschaltung nach einem der vorgenannten Ansprüche,
**dadurch gekennzeichnet, dass** als abschaltbarer Halbleiterschalter (21, 23, 25, 27) ein Insulated-Gate-BipolarTransistor vorgesehen ist.

6. Stromrichterschaltung nach einem der Ansprüche 1 bis 4, **dadurch gekennzeichnet, dass** als abschaltbarer Halbleiterschalter (21, 23, 25, 27) ein MOS-Feldeffekttransistor vorgesehen ist.

7. Stromrichterschaltung nach einem der Ansprüche 1 bis 4, **dadurch gekennzeichnet, dass** als abschaltbarer Halbleiterschalter (21, 23, 25, 27 ein Gate-Turn-Off-Thyristor vorgesehen ist.

8. Stromrichterschaltung nach einem der Ansprüche 1 bis 4, **dadurch gekennzeichnet, dass** als abschaltbarer Halbleiterschalter (21, 23, 25, 27) ein Integrated-Gate-Commutated-Thyristor vorgesehen ist.

## Claims

1. Converter circuit having at least one phase module (100) comprising an upper and a lower converter valve (T1,..., T6), with each converter valve (T1,..., T6) comprising at least one two-terminal subsystem, **characterized in that** each two-terminal subsystem (14) comprises four turn-off capable semiconductor switches (21, 23, 25, 27), four diodes (22, 24, 26, 28), two unipolar storage capacitors (29, 30) and an electronic circuit (32), **in that** a diode (22, 24, 26, 28) is electrically connected in antiparallel with each turn-off capable semiconductor switch (21, 23, 25, 27), **in that** these four turn-off capable semiconductor switches (21, 23, 25, 27) are electrically connected in series, **in that** the two unipolar storage capacitors (29, 30) are electrically connected in series, with this series connection being electrically connected in parallel with the series connection of the turn-off capable semiconductor switches (21, 23, 25, 27), **in that** each junction between two turn-off capable semiconductor switches (21, 23, 25, 27) forms a respective connecting terminal (X2 or X1) of the two-terminal subsystem (14), and **in that** a junction between the two storage capacitors (29, 30) that are electrically connected in series is electrically connected to a reference-potential terminal (M) of the electronic circuit (32).

2. Converter circuit having at least one phase module (100) comprising an upper and a lower converter valve (T1,..., T6), with each converter valve (T1,..., T6) comprising at least one two-terminal subsystem, **characterized in that** each two-terminal subsystem (16) comprises four turn-off capable semiconductor switches (21, 23, 25, 27), four diodes (22, 24, 26, 28), two unipolar storage capacitors (29, 30) and an electronic circuit (32), **in that** a diode (22, 24, 26, 28) is electrically connected in antiparallel with each turn-off capable semiconductor switch (21, 23, 25, 27), **in that** pairs of turn-off capable semiconductor switches (21, 23, 25, 27) are electrically connected in series, **in that** each series connection is electrically connected in parallel with a unipolar storage capacitor (29 or 30), **in that** a junction between two turn-off capable semiconductor switches (21, 23) of a first series connection forms a connecting terminal (X2) of the two-terminal subsystem (16), with an emitter of a second turn-off capable semiconductor switch (27) of the two turn-off capable semiconductor switches (25, 27) of a second series connection forming a second connecting terminal (X1) of the two-terminal subsystem (16), **in that** a junction between two turn-off capable semiconductor switches (25, 27) of the second series connection is electrically connected to an emitter of a second turn-off capable semiconductor switch (23) of the two turn-off capable semiconductor switches (21, 23) of the first series connection, and **in that** this junction is electrically connected to a reference-potential terminal (M) of the electronic circuit (32).

3. Converter circuit having at least one phase module (100) comprising an upper and a lower converter valve (T1,..., T6), with each converter valve (T1,..., T6) comprising at least one two-terminal subsystem, **characterized in that** each two-terminal subsystem (18) comprises four turn-off capable semiconductor switches (21, 23, 25, 27), four diodes (22, 24, 26, 28), two unipolar storage capacitors (29, 30) and an electronic circuit (32), **in that** a diode (22, 24, 26, 28) is electrically connected in parallel with each turn-off capable semiconductor switch (21, 23, 25, 27), **in that** pairs of turn-off capable semiconductor switches (21, 23, or 25, 27) are electrically connected in series, **in that** each series connection is electrically connected in parallel with a unipolar storage capacitor (29 or 30), **in that** a junction between two turn-off capable semiconductor switches (25, 27) of a second series connection forms a connecting terminal (X1) of the two-terminal subsystem (18), with a collector of a first turn-off capable semiconductor switch (21) of the two turn-off capable semiconductor switches (21, 23) of a first series connection forming a second connecting terminal (X2) of the subsystem (18), and **in that** a junction between two turn-off capable semiconductor switches (21, 23) of the first series connection is electrically connected to a collector of a first turn-off capable semiconductor switch (25) of the two turn-off capable semiconductor switches (25, 27) of the second series connection, and **in that** this junction is electrically connected to the positive terminal of the unipolar storage capacitor (29).

4. Converter circuit having at least one phase module (100) comprising an upper and a lower converter valve (T1,..., T6), with each converter valve (T1,..., T6) comprising at least one two-terminal subsystem, **characterized in that** each two-terminal subsystem (20) comprises four turn-off capable semiconductor switches (21, 23, 25, 27), four diodes (22, 24, 26, 28), two unipolar capacitors (29, 30) and an electronic circuit (32), **in that** a diode (22, 24, 26, 28) is electrically connected in antiparallel with each turn-off capable semiconductor switch (21, 23, 25, 27), **in that** pairs of turn-off capable semiconductor switches (21, 23 or 25, 27) are electrically connected in series, **in that** each series connection is electrically connected in parallel with a unipolar storage capacitor (29 or 30), **in that** the junctions between each pair of turn-off capable semiconductor switches (21, 23 or 25, 27) are connected together, **in that** a collector of a first turn-off capable semiconductor switch (21) of a first series connection and an emitter of a second turn-off capable semiconductor switch (27) of a second series connection form a respective connecting terminal (X2, X1) of the two-terminal subsystem (20), and **in that** a reference-potential terminal (M) of the electronic circuit (32) is electrically connected to an emitter of a second turn-off capable semiconductor switch (23) of the first series connection.

5. Converter circuit according to any of the previous claims, **characterized in that** an insulated gate bipolar transistor is provided as the turn-off capable semiconductor switches (21, 23, 25, 27).

6. Converter circuit according to any of Claims 1 to 4, **characterized in that** a MOS field effect transistor is provided as the turn-off capable semiconductor switches (21, 23, 25, 27).

7. Converter circuit according to any of Claims 1 to 4, **characterized in that** a gate turn-off thyristor is provided as the turn-off capable semiconductor switches (21, 23, 25, 27).

8. Converter circuit according to any of Claims 1 to 4, **characterized in that** an integrated gate commutated thyristor is provided as the turn-off capable semiconductor switches (21, 23, 25, 27).

## Revendications

1. Circuit convertisseur comprenant au moins un module ( 100 ) de phase ayant une soupape de convertisseur supérieure et une soupape de convertisseur inférieure ( T1, ..., T6 ), chaque soupape ( T1, ..., t6 ) de convertisseur ayant au moins un sous-système bipolaire, **caractérisé en ce que** chaque sous-système ( 14 ) bipolaire a quatre interrupteurs ( 21, 23, 25, 27 ) à semiconducteur pouvant être ouverts, quatre diodes ( 22, 24, 26, 28 ), deux condensateurs ( 29, 30 ) unipolaires accumulateurs et une électronique ( 32 ), **en ce qu'**une diode ( 22, 24, 26, 28 ) est montée d'une manière antiparallèle électriquement à chaque interrupteur ( 21, 23, 25, 27 ) à semiconducteur pouvant être ouvert, **en ce que** les deux condensateurs ( 29, 30 ) accumulateurs unipolaires sont montés électriquement en série, ce circuit série étant monté électriquement en parallèle au circuit série des interrupteurs ( 21, 23, 25, 27 ) à semiconducteur pouvant être ouverts, **en ce que** respectivement un point de liaison de deux interrupteurs ( 21, 23, 25, 27 ) à semiconducteur pouvant être ouverts forme respectivement une borne ( X2 et X1 ) de connexion du sous-système ( 14 ) bipolaire, **en ce qu'**un point de liaison des deux condensateurs ( 29, 30 ) accumulateurs montés électriquement en série est relié d'une manière conductrice à l'électricité à une borne ( M ) de potentiel de référence de l'électronique ( 32 ).

2. Circuit convertisseur comprenant au moins un module ( 100 ) de phase ayant une soupape de convertisseur supérieure et une soupape de convertisseur inférieure ( T1, ..., T6 ), chaque soupape ( T1, ..., t6 ) de convertisseur ayant au moins un sous-système bipolaire, **caractérisé en ce que** chaque sous-système ( 16 ) bipolaire a quatre interrupteurs ( 21, 23, 25, 27 ) semiconducteurs pouvant être ouverts, quatre diodes ( 22, 24, 26, 28 ), deux condensateurs ( 29, 30 ) unipolaires accumulateurs et une électronique ( 32 ), **en ce qu'**une diode ( 22, 24, 26, 28 ) est montée d'une manière antiparallèle électriquement à chaque interrupteur ( 21, 23, 25, 27 ) à semiconducteur pouvant être ouvert, **en ce que** respectivement deux interrupteurs ( 21, 23, 25, 27 ) à semiconducteur pouvant être ouverts sont montés électriquement en série, en ce chaque circuit série est monté électriquement en parallèle à un condensateur ( 29 et 30 ) unipolaire accumulateurs, **en ce qu'**un point de liaison de deux interrupteurs ( 21, 23 ) à semiconducteur pouvant être ouverts d'un premier circuit série forme une borne ( X2 ) du sous-système ( 16 ) bipolaire, un émetteur d'un deuxième interrupteur ( 27 ) à semiconducteur pouvant être ouvert des deux interrupteurs ( 25, 27 ) à semiconducteur pouvant être ouverts d'un deuxième circuit série formant une deuxième borne ( 5 ) de connexion du deuxième sous-système ( 16 ) bipolaire, **en ce qu'**un point de liaison de deux interrupteurs ( 25, 27 ) à semiconducteur pouvant être ouverts du deuxième circuit série est relié d'une manière conductrice de l'électricité à un émetteur d'un deuxième interrupteur ( 23 ) à semiconducteur pouvant être ouvert des deux interrupteurs ( 21, 23 ) à semiconducteur pouvant être ouverts du premier circuit série et ce que ce point de liaison est relié d'une manière conductrice de l'électricité à une borne ( M ) de potentiel de référence de l'électronique ( 32 ).

3. Circuit convertisseur comprenant au moins un module ( 100 ) de phase ayant une soupape de convertisseur supérieure et une soupape de convertisseur inférieure ( T1, ..., T6 ), chaque soupape ( T1, ..., t6 ) de convertisseur ayant au moins un sous-système bipolaire, **caractérisé en ce que** chaque sous-système ( 18 ) bipolaire a quatre interrupteurs ( 21, 23, 25, 27 ) à semiconducteur pouvant être ouverts, quatre diodes ( 22, 24, 26, 28 ), deux condensateurs ( 29, 30 ) unipolaires accumulateurs et une électronique ( 32 ), **en ce qu'**une diode ( 22, 24, 26, 28 ) est monté en parallèle électriquement avec chaque interrupteur ( 21, 23, 25, 27 ) à semiconducteur pouvant être ouvert, **en ce que** respectivement deux interrupteurs ( 21, 23 et 25, 27 ) à semiconducteur pouvant être ouverts sont montés électriquement en série, **en ce que** chaque circuit série est monté électriquement en parallèle avec un condensateur ( 29 et 30 ) accumulateurs unipolaire, **en ce qu'**un point de liaison de deux interrupteurs ( 25, 27 ) à semiconducteur pouvant être ouverts d'un deuxième circuit série forme une borne ( X1 ) de connexion du sous-système ( 18 ) bipolaire, un collecteur d'un premier interrupteur ( 21 ) à semiconducteur pouvant être ouvert des deux interrupteurs ( 21, 23 ) à semiconducteur pouvant être ouverts d'un premier circuit série formant une deuxième borne ( X2 ) de connexion du sous-système ( 18 ) et **en ce qu'**un point de liaison de deux interrupteurs ( 21, 23 ) à semiconducteur pouvant être ouverts du premier circuit série est relié d'une manière conductrice d'électricité à un collecteur d'un premier interrupteur ( 25 ) à semiconducteur pouvant être ouvert des deux interrupteurs ( 25, 27 ) à semiconducteur pouvant être ouverts du deuxième circuit série et **en ce que** ce point de liaison est relié d'une manière conductrice de l'électricité à la borne positive du condensateur ( 29 ) accumulateurs unipolaire.

4. Circuit convertisseur comprenant au moins un module ( 100 ) de phase ayant une soupape de convertisseur supérieure et une soupape de convertisseur inférieure ( T1, ..., T6 ), chaque soupape ( T1, ..., t6 ) de convertisseur ayant au moins un sous-système bipolaire, en ce que chaque sous-système ( 20 ) bipolaire a quatre interrupteurs ( 21, 23, 25, 27 ) à semiconducteur pouvant être ouverts, quatre diodes ( 22, 24, 26, 28 ), deux condensateurs ( 29, 30 ) unipolaires et une électronique ( 32 ), en ce qu'une diode ( 22, 24, 26, 28 ) est montée électriquement d'une manière antiparallèle à chaque interrupteur ( 21, 23, 25, 27 ) à semiconducteur pouvant être ouvert, en ce que respectivement deux interrupteurs ( 21, 23, et 25, 27 ) à semiconducteur pouvant être ouverts sont montés électriquement en série, en ce que chaque circuit série est monté électriquement parallèle avec un condensateur ( 29 et 30 ) accumulateurs unipolaire, en ce que les points de liaison de respectivement deux interrupteurs ( 21, 23 et 25, 27 ) à semiconducteur pouvant être ouverts sont reliés entre eux, en ce qu'un collecteur d'un premier interrupteur ( 21 ) à semiconducteur pouvant être ouvert d'un premier circuit série et un émetteur d'un deuxième interrupteur ( 27 ) à semiconducteur pouvant être ouvert d'un deuxième circuit série forment respectivement une borne ( X2, X1 ) de connexion du sous-système ( 20 ) bipolaire et en ce qu'une borne ( M ) de potentiel de référence de l'électronique ( 32 ) est reliée d'une manière conductrice de l'électricité à un émetteur d'un deuxième interrupteur ( 23 ) à semiconducteur pouvant être ouvert du premier circuit série.

5. Circuit convertisseur suivant l'une des revendications précédentes,
**caractérisé en ce qu'**il est prévu, comme interrupteur ( 21, 23, 25, 27 ) à semiconducteur pouvant être ouvert, un transistor bipolaire à grille isolée.

6. Circuit convertisseur suivant l'une des revendications 1 à 4,
**caractérisé en ce qu'**il est prévu, comme interrupteur ( 21, 23, 25, 27 ) à semiconducteur pouvant être ouvert, un transistor à effet de champ MOS.

7. Circuit convertisseur suivant l'une des revendications 1 à 4,
**caractérisé en ce qu'**il est prévu, comme interrupteur ( 21, 23, 25, 27 ) à semiconducteur pouvant être ouvert, un thyristor gate-turn-off.

8. Circuit convertisseur suivant l'une des revendications 1 à 4,
**caractérisé en ce qu'**il est prévu, comme interrupteur ( 21, 23, 25, 27 ) à semiconducteur pouvant être ouvert, un thyristor integrated-gate-commutated.
